# EUROPÄISCHE PATENTSCHRIFT

(11) **EP 3 960 366 B1**
(45) Veröffentlichungstag und Bekanntmachung des Hinweises auf die Patenterteilung: **20.09.2023**
(21) Anmeldenummer: 21192370.1
(22) Anmeldetag: 20.08.2021
(51) Int. Cl.: B23K 26/70

(54) **MOBILE LASERSCHUTZWAND**
MOBILE LASER SHIELDING PANEL
PAROI MOBILE DE PROTECTION LASER

(30) Priorität: 27.08.2020 DE 102020122467; 10.12.2020 DE 102020132983
(43) Veröffentlichungstag der Anmeldung: 02.03.2022
(73) Patentinhaber: ALOtec Dresden GmbH, 01723 Kesselsdorf (DE)
(72) Erfinder: Hensel, Eckehard, 01723 Kesselsdorf (DE); Kuhn, Clemens, 01723 Kesselsdorf (DE)
(74) Vertreter: Werner, André

(56) Entgegenhaltungen:
- EP-A1- 2 153 931
- DE-A1-102018 115 387
- DE-C1- 19 629 037
- US-A1- 2003 051 825
- US-A1- 2011 260 737
- US-A1- 2020 002 989

## Beschreibung

Die Erfindung betrifft eine mobile Laserschutzwand zur temporären Abschirmung eines Laserbereichs, d. h. eines Arbeitsbereichs, in dem Laserbearbeitungen mit hochenergetischen Laserstrahlen stattfinden. Die Laserschutzwände dienen der Gewährleistung eines umfänglichen Schutzes der Anlagenbediener sowie Dritter vor Gefährdungen durch die Laserstrahlen während der Laserbearbeitung.

Der Einsatz mobiler Laserschutzwände ist gängige Praxis, um den Laserbereich bei Laserbearbeitungen, zum Beispiel beim Laserhärten oder beim Laserauftragschwei-ßen, abzuschirmen. Verkettet bilden die mobilen Laserschutzwände die temporäre Laserschutzein- oder -umhausung der meist ebenfalls mobilen Laserbearbeitungsanlagen. Hauptbestandteil handelsüblicher mobiler Laserschutzwände ist ein Schaumstoff, der bei Auftreffen eines Laserstrahls verkohlt. Der verkohlte Schaumstoff bietet bei einer maximalen Laserleistung von 4 kW eine hinreichende Abschirmung des Laserbereichs über eine Dauer von 100 Sekunden. Laserschutzwände mit einem solchen, zwischen Metalllagen eingeschlossenen Schaumstoffkern sind u. a. aus DE 10 2006 003 450 A1 oder DE 10 2014 118 739 A1 bekannt. Eine doppelwandige mobile Laserschutzwand mit einer Mineralwollefüllung zwischen zwei Metallplatten offenbart AT 515 337 A2. Die Laserschutzwände können zudem, wie zum Beispiel aus DE 10 2018 210 869 A1 hervorgeht, mit Rahmenelementen versehen sein.

Eine zusammenklappbare, mobile Laserschutzwand aus Aluminiumelementen ist in US 2003 / 0051825 A1 gezeigt. Eine Laserschutzwand mit einer Lage, in oder auf die wenigstens ein metallischer Leiter textiltechnologisch ein- oder aufgebracht ist, ist in EP 2 153 931 A1 offenbart. US 2011 / 0260737 beschreibt ein Laserschutzwandelement, aus elektrisch leitfähigen Platten, zwischen denen ein Heißleiter eingebettet ist.

Nachteil dieser handelsüblichen mobilen Laserschutzwände ist ihre relativ große Dicke (≥ 40 mm). Im Regelfall sind zum Schutz des Laserbereichs einer Laserbearbeitungsanlage mehrere Laserschutzwände für eine adäquate Laserschutzein- oder -umhausung erforderlich. Dieses Paket aus Laserschutzwänden nimmt beim gemeinsamen Transport mit der Laserbearbeitungsanlage einen nicht unerheblichen Teil des beanspruchten Laderaums ein und verursacht in Relation zur eigentlichen Laserbearbeitungsanlage häufig unverhältnismäßig hohe Transportkosten.

Zudem sind die handelsüblichen mobilen Laserschutzwände relativ schwer. Zum Beispiel hat eine mobile Laserschutzwand in der herkömmlichen Standardgröße von 2,2 m Höhe und 1,0 m Breite eine Masse von ca. 35 kg. Solche mobilen Laserschutzwände können folglich nur bedingt durch eine Einzelperson gehandhabt werden.

Neben diesen handelsüblichen mobilen Laserschutzwänden mit Schaumstoffkernen sind Laserschutzwände bekannt, die als quaderförmige Hohlkörper aus Metallblechen ausgebildet oder in kompakter Bauweise aus mehreren Lagen verschiedener Werkstoffe aufgebaut sind. Eine Laserschutzwand, die aus mehreren Lagen Aluminiumfolien, dazwischen liegenden Carbonfaservliesen sowie weiteren Gewebelagen besteht, offenbart DE 41 13 668 A1. Weitere Laserschutzwände mit einem mehrlagigen Aufbau aus Metallplatten und Graphit-Zwischenschichten, beschreiben US 4 730 113 A, DE 10 2018 115 387 A1 und DE 196 29 037 C1. Aufgrund ihres komplexen Aufbaus haben sich diese Laserschutzwände am Markt jedoch allenfalls in Nischenanwendungen durchgesetzt.

Aufgabe der Erfindung ist es, eine mobile Laserschutzwand mit einer geringen Dicke, d. h. mit einer Dicke von bis zu 20 mm bereitzustellen, die platzsparend transportiert werden kann. Sie soll zudem eine geringe Eigenmasse besitzen, sodass sie ohne Hilfsmittel von einer Person aufgestellt bzw. abgebaut werden kann.

Diese Aufgabe wird durch eine mobile Laserschutzwand zur temporären Abschirmung eines Laserbereichs mit den kennzeichnenden Merkmalen nach dem Anspruch 1 gelöst; zweckmäßige Weiterbildungen der Erfindung sind in den Ansprüchen 2 bis 10 aufgeführt.

Nach Maßgabe der Erfindung umfasst die mobile Laserschutzwand ein aus mehreren Lagen aufgebautes, vorzugsweise rechteckig ausgebildetes Plattenelement, das in einem Rahmen aus Profilelementen eingefasst ist. Mindestens zwei der Lagen des Plattenelements sind aus Metallblech gebildete Metalllagen; mindestens eine der Lagen des Plattenelements ist eine aus einer Grafitfolie bestehende Grafitlage. Das Metallblech besteht vorzugsweise aus einem Leichtmetall, insbesondere aus einem Aluminiumwerkstoff, d. h. aus Aluminium oder einer Aluminiumlegierung; die Grafitfolie besteht aus Blähgrafit.

Die Grafitlage ist sandwichartig durch die kontaktierend anliegenden Metalllagen eingeschlossen. Sie ist hierbei mit den anliegenden Metalllagen adhäsiv mittels eines Klebstoffes verbunden oder durch eine Klemmung angepresst sein.

Die bevorzugte Dicke der Grafitfolie liegt im Bereich von 0,5 mm bis 5 mm, insbesondere im Bereich von 1,50 mm bis 2,49 mm; die Metallbleche weisen eine bevorzugte Blechdicke im Bereich von 0,50 mm bis 1,49 mm auf.

Einer der Vorteile der erfindungsgemäßen Laserschutzwand ist, dass das Plattenelement im Vergleich zu den handelsüblichen Schaumstoffkern-Laserschutzwänden
- bei gleicher Schutzwirkung - mit einer deutlich geringeren Gesamtdicke herstellbar ist. Die Laserschutzwände können folglich auf engem Raum gestapelt transportiert werden. Bei Nutzung der erfindungsgemäßen Laserschutzwände lassen sich somit
- insbesondere im Luftfrachtbereich - erheblich Transportkosten einsparen.

Die Grafitlage bildet innerhalb der Laserschutzwand die hitzebeständige Barriere. Da Grafit kaum Wärme speichert, können die Laserschutzwände zudem zeitnah nach dem Auftreffen von Laserstrahlung berührt werden. Die Metalllagen, insbesondere Metalllagen aus Aluminiumblech, gewährleisten die mechanische Stabilität der sandwichartig eingeschlossenen Grafitlage. Um die mechanische Stabilität weiter zu erhöhen, können die Metalllagen statt aus Kompaktmaterial auch aus Verbundblech bestehen.

Die Laserschutzwände zeichnen sich zudem durch ihr geringes Eigengewicht aus. Sie können problemlos von Einzelpersonen beim Auf- oder Abbau einer aus den Laserschutzwänden gebildeten Laserschutzumhausung gehandhabt werden.

Gemäß einer Ausgestaltung der Erfindung bestehen die - vorzugsweise als Profilstangen ausgebildeten - Profilelemente aus einem Aluminiumwerkstoff. Der Rahmen aus den am Markt in breiter Auswahl verfügbaren Aluminiumprofilen verleiht der Laserschutzwand eine hohe mechanische Stabilität bei gleichzeitig geringem Gewicht.

Zur Erleichterung des Transports können am bodenseitigen Profilelement der Laserschutzwand Transportrollen angebracht sein. Dies gewährleistet eine hohe Flexibilität bzw. Mobilität beim Ausstellen bzw. Positionieren der Laserschutzwand.

Zur Bodenabstützung können zudem oder alternativ Stützelemente (Fußelemente) am bodenseitigen Profilelement der Laserschutzwand angebracht sein.

Die mobile Laserschutzwand kann ferner ein oder mehrere Sensoren zur Detektion frei werdender Laserstrahlung innerhalb des Laserbereichs aufweisen. Diese Sensorik kann ihrerseits mit der Sicherheitssteuerung der Laserbearbeitungsanlage verbunden werden. Diese Sensoren können u. a. Lichtvorhänge oder der Lichtschranken sein, zum Beispiel ausgebildet als "unsichtbares" Dach der Laserschutzumhausung. Bei Durchtritt des Laserlichts durch die Lichtschranken bzw. Lichtvorhänge wird die Laserbearbeitungsanlage mittels der Sicherheitssteuerung abgeschaltet.

Gemäß einer weiteren Ausgestaltung besitzt die Laserschutzwand einen im Bereich ihrer Bodenkante angebrachten Bodenschutzvorhang. Dieser Bodenschutzvorhang besteht beispielsweise aus einem textilen Laserschutzmaterial, das vorzugsweise doppelt gelegt ist. Der Bodenschutzvorhang verschließt die Lücke bzw. den Sicht- oder Blickspalt zwischen dem Boden und dem bodenseitigen Profilelement.

Ferner kann die Laserschutzwand einen im Bereich einer Seitenkante angebrachten, seitlich überstehenden Seitenschutzvorhang aufweisen. Dieser kann - wie der Bodenschutzvorhang - aus einem textilen Laserschutzmaterial bestehen; das textile Laserschutzmaterial ist ebenfalls bevorzugt doppelt gelegt. Die Laserschutzwand ist mittels des Seitenschutzvorhangs mit weiteren Laserschutzwänden überlappend verbindbar. So kann eine Laserschutzumhausung beispielsweise aus mehreren dieser mobilen Laserschutzwände gebildet sein. Die Laserschutzwände sind hierbei mittels der Seitenschutzvorhänge so miteinander verbunden, dass einer der jeweiligen Seitenschutzvorhänge die Lücke bzw. den Sicht- oder Blickspalt zwischen den zueinander gewandten Seitenkanten benachbarter Laserschutzwände überlappend verdeckt bzw. verschließt.

Ferner kann eine aus den Laserschutzwänden gebildete Laserschutzumhausung mit einer Laserschutzdecke überspannt sein. Der Laserbereich ist hierdurch vollständig eingehaust.

Zur Ausbildung eine Laserschutzumhausung oder Laserschutzeinhausung können beliebig viele Laserschutzwände miteinander kombiniert bzw. aneinandergereiht werden.

In die mobile Laserschutzwand können ferner zweikanalige Leitungen integriert sein, mittels denen bei Verkettung der Laserschutzwände zu einer Laserschutzum- oder - einhausung ein geschlossener Sicherheitskreis ausbildbar ist. Dieser ist wiederum mit der Sicherheitssteuerung der Laserbearbeitungsanlage verbunden. Werden die Laserschutzwände während des Betriebs der Laserbearbeitungsvorrichtung voneinander getrennt, wird der Sicherheitskreis unterbrochen und der Laserbearbeitungsprozess gestoppt.

Die Größe eine Laserschutzwand ist grundsätzlich frei wählbar und kann an den Bedarfsfall angepasst werden. Die bevorzugte Standardgröße der Laserschutzwand beträgt in der Höhe 2,2 m und in der Breite 1,0 m.

Die Erfindung ist nachfolgend anhand eines Ausführungsbeispiels und mit Bezug auf die schematischen Zeichnungen näher erläutert, wobei gleiche oder ähnliche Merkmale mit gleichen Bezugszeichen versehen sind. Dazu veranschaulichen:
- Fig. 1:: die Laserschutzwand in der Frontansicht, und
- Fig. 2:: die Laserschutzwand im Querschnitt.

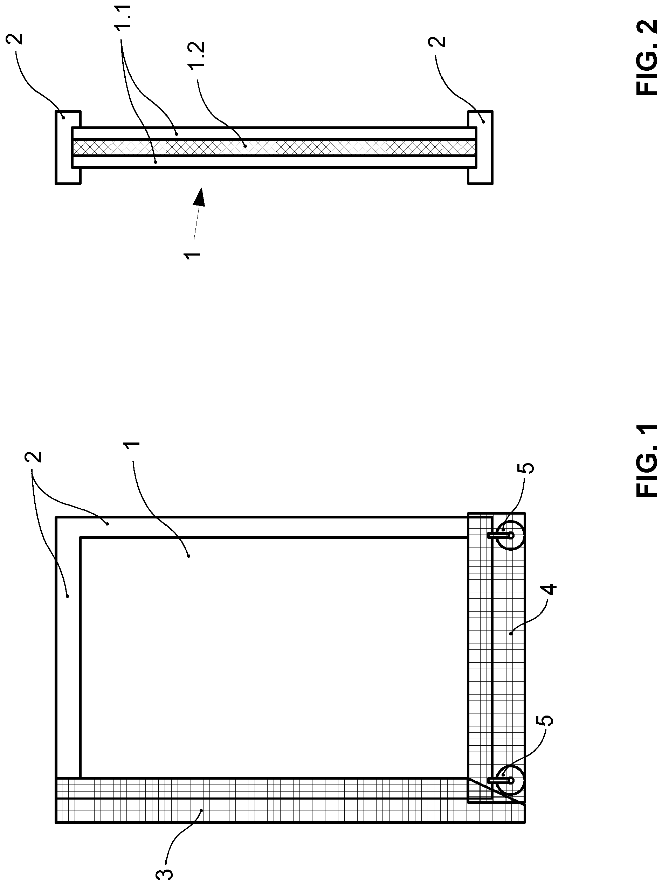

Das Plattenelement 1 der Laserschutzwand gemäß der Fig. 1 ist vollumfänglich in den aus den Profilelementen 2 bestehenden Rahmen eingefasst. Die Profilelemente 2 sind Profilstangen aus Aluminium bzw. aus einer Aluminiumlegierung. Die Größe der Laserschutzwand beträgt 2,2 m x 1,0 m.

Im Bereich einer der Seitenkanten ist der seitlich überstehende Seitenschutzvorhang 3 angebracht, der aus doppelt gelegtem textilen Laserschutzmaterial besteht. Mittels des Seitenschutzvorhangs 3 können zwei Laserschutzwände verbunden werden. Hierbei überlappt der Seitenschutzvorhang 3 die beiden Laserschutzwände im Bereich der aneinandergrenzenden Seitenkanten, sodass der Sicht- bzw. Blickspalt zwischen diesen benachbarten Laserschutzwänden verdeckt bzw. verschlossen ist.

Am bodenseitigen Profilelement 2 ist der Bodenschutzvorhang 4 angebracht, der den Sicht- bzw. Blickspalt zwischen dem Boden und der Unterkante des bodenseitigen Profilelements 2 abdeckt. Der Bodenschutzvorhang 4 besteht ebenfalls aus doppelt gelegtem textilen Laserschutzmaterial.

Die bodenseitig am Rahmen befestigten Transportrollen 5 dienen zum leichteren Verfahren und Positionieren der Laserschutzwand.

Aus der Fig. 2, in der die Laserschutzwand im Querschnitt ohne den Seitenschutzvorhang 3, den Bodenschutzvorhang 4 und die Transportrollen 5 dargestellt ist, geht der dreilagige Aufbau des Plattenelements 1 hervor. Die Grafitlage 1.2 befindet sich im Sandwich zwischen den beiden Metalllagen 1.1. In dieser beispielhaften Ausführung der Laserschutzwand bestehen die Metalllagen 1.1 aus einem Aluminiumblech mit einer Blechdicke von 1 mm und die Grafitlage 1.2 aus einer Grafitfolie bzw. Grafitmatte mit einer Dicke von 2 mm. Rand- bzw. kantenseitig ist das Plattenelement 1 von den Profilelementen 2 eingefasst.

Die Laserbeständigkeit der Laserschutzwand gemäß dieser Ausführung liegt bei Bestrahlung mit einer Laserleistung von 5 kW bei über 100 Sekunden.

### Bezugszeichenliste

- 1: Plattenelement
- 1.1: Metalllage
- 1.2: Grafitlage
- 2: Profilelement
- 3: Seitenschutzvorhang
- 4: Bodenschutzvorhang
- 5: Transportrollen

## Patentansprüche

1. Mobile Laserschutzwand zur temporären Abschirmung eines Laserbereichs, umfassend ein in einen Rahmen aus Profilelementen (2) eingefasstes Plattenelement (1), das aus mehreren Lagen (1.1, 1.2) aufgebaut ist,
wobei zwei der Lagen (1.1, 1.2) des Plattenelements (1) aus Metallblech gebildeten Metalllagen (1.1) sind, **dadurch gekennzeichnet, dass** eine der Lagen (1.1, 1.2) des Plattenelements (1) eine aus einer Grafitfolie bestehende Grafitlage (1.2) ist, die sandwichartig von den an der Grafitlage (1.2) kontaktierend anliegenden Metalllagen (1.1) eingeschlossen ist,
wobei die Grafitlage (1.2) mit den anliegenden Metalllagen (1.1) adhäsiv mittels eines Klebstoffes verbunden oder durch eine Klemmung angepresst ist und wobei die Grafitfolie der Grafitlage (1.2) aus Blähgrafit besteht.

2. Mobile Laserschutzwand nach Anspruch 1, **dadurch gekennzeichnet, dass** die Dicke der Metallbleche im Bereich von 0,5 mm bis 5 mm liegt.

3. Mobile Laserschutzwand nach Anspruch 1 oder 2, **dadurch gekennzeichnet, dass** die Dicke der Grafitfolie im Bereich von 1,50 mm bis 2,49 mm liegt.

4. Mobile Laserschutzwand nach einem der Ansprüche 1 bis 3, **dadurch gekennzeichnet, dass** die Profilelemente (2) Profilstangen aus einem Aluminiumwerkstoff sind.

5. Mobile Laserschutzwand nach einem der Ansprüche 1 bis 4, **dadurch gekennzeichnet, dass** das Metallblech der Metalllage (1.1) aus einem Aluminiumwerkstoff besteht.

6. Mobile Laserschutzwand nach einem der Ansprüche 1 bis 5, **dadurch gekennzeichnet, dass** am bodenseitigen Profilelement (2) der Laserschutzwand Transportrollen (5) und/oder Stützelemente angebracht sind.

7. Mobile Laserschutzwand nach einem der Ansprüche 1 bis 6, **dadurch gekennzeichnet, dass** die Laserschutzwand ein oder mehrere Sensoren zur Detektion frei werdender Laserstrahlung innerhalb des Laserbereichs aufweist.

8. Mobile Laserschutzwand nach einem der Ansprüche 1 bis 7, **dadurch gekennzeichnet, dass** die Laserschutzwand einen im Bereich ihrer Bodenkante angebrachten Bodenschutzvorhang (4) aufweist, der aus einem doppelt gelegten textilen Laserschutzmaterial besteht.

9. Mobile Laserschutzwand nach einem der Ansprüche 1 bis 8, **dadurch gekennzeichnet, dass** die Laserschutzwand einen im Bereich einer Seitenkante angebrachten, seitlich überstehenden Seitenschutzvorhang (3) aufweist, der aus einem doppelt gelegten textilen Laserschutzmaterial besteht, wobei die Laserschutzwand mittels des Seitenschutzvorhang (3) mit weiteren Laserschutzwänden überlappend verbindbar ist.

10. Laserschutzumhausung, umfassend mehrere miteinander verkettete mobile Laserschutzwände nach einem der Ansprüche 1 bis 9, **dadurch gekennzeichnet, dass** jede der mobilen Laserschutzwände eine zweikanalige Leitung aufweist, wobei die zweikanaligen Leitungen der Laserschutzwände innerhalb der Laserschutzumhausung zu einem geschlossenen Sicherheitskreis verbunden sind.

## Claims

1. Mobile laser protection wall for temporarily shielding a laser area, comprising a plate element (1) which is enclosed in a frame made of profile elements (2) and is made up of several layers (1.1, 1.2), wherein two of the layers (1.1, 1.2) of the plate element (1) are metal layers (1.1) formed from sheet metal, **characterized in that** one of the layers (1.1, 1.2) of the plate element (1) is a graphite layer (1.2) consisting of a graphite foil, which is enclosed in a sandwich-like manner by the metal layers (1.1) in contact with the graphite layer (1.2), wherein the graphite layer (1.2) being adhesively connected to the adjoining metal layers (1.1) by means of an adhesive or being pressed on by clamping, and wherein the graphite foil of the graphite layer (1.2) consisting of expandable graphite.

2. Mobile laser protection wall according to claim 1, **characterized in that** the thickness of the metal sheets is in the range from 0.5 mm to 5 mm.

3. Mobile laser protection wall according to claim 1 or 2, **characterized in that** the thickness of the graphite foil is in the range from 1.50 mm to 2.49 mm.

4. Mobile laser protection wall according to one of claims 1 to 3, **characterized in that** the profile elements (2) are profile rods made from an aluminum material.

5. Mobile laser protection wall according to one of claims 1 to 4, **characterized in that** the metal sheet of the metal layer (1.1) consists of an aluminum material.

6. Mobile laser protection wall according to one of claims 1 to 5, **characterized in that** transport rollers (5) and/or support elements are attached to the bottom profile element (2) of the laser protection wall.

7. Mobile laser protection wall according to one of claims 1 to 6, **characterized in that** the laser protection wall has one or more sensors for detecting released laser radiation within the laser area.

8. Mobile laser protection wall according to one of claims 1 to 7, **characterized in that** the laser protection wall has a floor protection curtain (4) which is attached in the region of its bottom edge and consists of a double-layered textile laser protection material.

9. Mobile laser protection wall according to one of claims 1 to 8, **characterized in that** the laser protection wall has a laterally protruding side protection curtain (3) attached in the area of a side edge, which consists of a double-layered textile laser protection material, wherein the laser protection wall being overlappingly connectable to other laser protection walls by means of the side protection curtain (3).

10. Laser protective housing, comprising a plurality of mobile laser protective walls according to one of claims 1 to 9 linked to one another, **characterized in that** each of the mobile laser protective walls has a two-channel line, wherein the two-channel lines of the laser protective walls being connected within the laser protective housing to form a closed safety circuit.

## Revendications

1. Paroi mobile de protection laser pour le blindage temporaire d'une zone laser, comprenant un élément de panneau (1) encadré dans un cadre d'éléments profilés (2), qui est constitué de plusieurs couches (1.1, 1.2), dans lequel
deux des couches (1.1, 1.2) de l'élément de panneau (1) sont des couches métalliques (1.1) formées de tôle métallique, **caractérisé en ce que**
l'une des couches (1.1, 1.2) de l'élément de panneau (1) est constituée d'une couche de graphite (1.2) constituée d'une feuille de graphite, qui est entourée en sandwich par les couches métalliques (1.1) appliquées en contact sur la couche de graphite (1.2), la couche de graphite (1.2) étant reliée par adhérence aux couches métalliques (1.1) appliquées au moyen d'un adhésif ou étant pressée par un serrage et la feuille de graphite de la couche de graphite (1.2) étant constituée de graphite expansé.

2. Paroi mobile de protection laser selon la revendication 1, **caractérisée en ce que** l'épaisseur des tôles métalliques est comprise entre 0,5 mm et 5 mm.

3. Paroi mobile de protection laser selon la revendication 1 ou 2, **caractérisée en ce que** l'épaisseur de la feuille de graphite est comprise entre 1,50 mm et 2,49 mm.

4. Paroi mobile de protection laser selon l'une des revendications 1 à 3, **caractérisée en ce que** les éléments profilés (2) sont des barres profilées en un matériau à base d'aluminium.

5. Paroi mobile de protection laser selon l'une des revendications 1 à 4, **caractérisée en ce que** la tôle métallique de la couche métallique (1.1) est constituée d'un matériau à base d'aluminium.

6. Paroi mobile de protection laser selon l'une des revendications 1 à 5, **caractérisée en ce que** des rouleaux de transport (5) et/ou des éléments d'appui sont montés sur l'élément profilé (2) côté sol de la paroi de protection laser.

7. Paroi mobile de protection laser selon l'une des revendications 1 à 6, **caractérisée en ce que** la paroi de protection laser présente un ou plusieurs capteurs pour la détection du rayonnement laser libéré à l'intérieur de la zone laser.

8. Paroi mobile de protection laser selon l'une des revendications 1 à 7, **caractérisée en ce que** la paroi de protection laser présente un rideau de protection du sol (4) installé dans la zone de son bord inférieur, qui est constitué d'un matériau textile de protection laser à double couche.

9. Paroi mobile de protection laser selon l'une des revendications 1 à 8, **caractérisée en ce que** la paroi de protection laser présente un rideau de protection latérale (3) placé dans la zone d'un bord latéral et dépassant latéralement, qui est constitué d'un matériau textile de protection laser à double couche, la paroi de protection laser pouvant être reliée par chevauchement à d'autres parois de protection laser au moyen du rideau de protection latérale (3).

10. Enceinte de protection laser, comprenant plusieurs parois mobiles de protection laser reliées entre elles selon l'une des revendications 1 à 9, **caractérisée en ce que** chacune des parois mobiles de protection laser présente une ligne à deux canaux, les lignes à deux canaux des parois de protection laser étant reliées à l'intérieur de l'enceinte de protection laser pour former un circuit de sécurité fermé.
